(19) Europäisches Patentamt
European Patent Office
Office européen des brevets

(11) EP 1 975 495 A1

(12) EUROPEAN PATENT APPLICATION

(43) Date of publication:
01.10.2008 Bulletin 2008/40

(51) Int Cl.:
F16L 33/207 (2006.01) F16L 11/08 (2006.01)

(21) Application number: 08153400.0

(22) Date of filing: 27.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 29.03.2007 JP 2007089647

(71) Applicant: TOKAI RUBBER INDUSTRIES, LTD.
Komaki-shi,
Aichi-ken, 485-8550 (JP)

(72) Inventor: Takagi, Yuji
c/o Tokai Rubber Industries, Ltd.
Komaki-shi, Aichi-ken 485-8550 (JP)

(74) Representative: Vossius & Partner
Siebertstrasse 4
81675 München (DE)

# (54) Hose with joint fitting for conveying carbon dioxide refrigerant

(57) A hose (10) with ajoint fitting for conveying a carbon dioxide refrigerant has a hose body (12) and a joint fitting (14). The joint fitting (14) is provided with an insert pipe (16) inserted in an end portion of the hose body (12), and a socket fitting (18) including a sleeve (20) and a radially inwardly directed collar portion (22) on an axial end of the sleeve (20). An axial blocking layer (42) blocking an axial leakage path of the refrigerant is provided between an outer surface of the insert pipe (16) and an inner surface of the hose body (12), and a radial blocking layer (44) blocking a radial leakage path of the refrigerant is provided between an inner surface of the collar portion (22) and an end surface of the hose body (12).

FIG.1

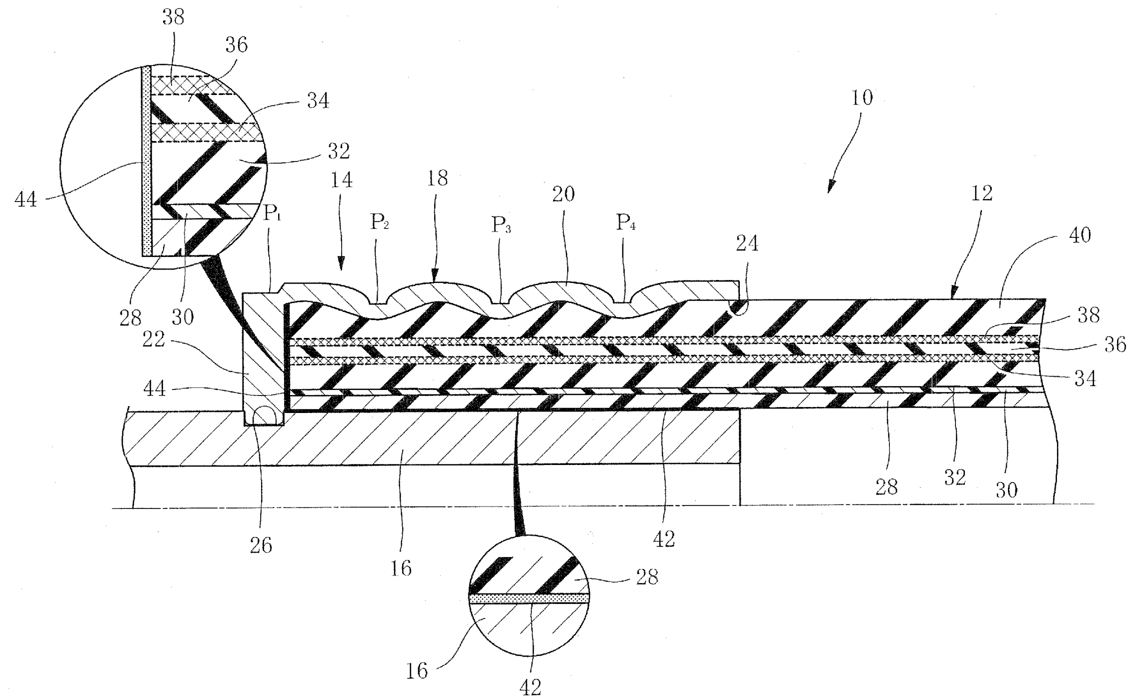


EP 1 975 495 A1

## Description

The present invention relates to a hose for conveying a refrigerant, specifically, to a hose with a joint fitting for conveying a carbon dioxide ($CO_2$) refrigerant.

Conventionally, a hose predominantly-comprised of a rubber layer has been widely used for conveying a refrigerant.

One of major purposes for using such rubber hose for conveying a refrigerant is to absorb vibration by the hose.

For example, an air conditioner hose, namely a hose for conveying a refrigerant in an engine compartment of an automobile serves to absorb vibration of an engine, vibration of a compressor of an air conditioner or various vibrations associated with a moving vehicle, and to restrain transmission of vibration from one to the other of members that are connected each other by the hose.

The hose predominantly-comprised of the rubber layer for conveying a refrigerant is excellent also in easiness of handling and assembly according to a piping layout due to high flexibility of the hose when adapted for connecting piping system components in an engine compartment of an automobile.

And now, for a refrigerant conveying hose such as an air conditioner hose, permeation resistance (low permeability) to a refrigerant gas or gas refrigerant as an internal fluid has been increasingly demanded in recent years in view of an environmental protection, but a conventional rubber hose cannot fully meet such demand.
Then, for example, Patent Document 1 as below discloses a hose including an innermost layer made of polyamide resin that provides permeation resistance to gas of an internal fluid.

By the way, although chlorofluorocarbon (CFC) had been conventionally used for a refrigerant of an air conditioner, use of CFC has now been banned since CFC depletes the ozone layer in the atmosphere. Use of substitution of CFC such as R134a is also going to be restrained. Then, a $CO_2$ refrigerant is now highlighted as another substitution of CFC, and is studied for practical use.
However, a $CO_2$ refrigerant has extremely high tendency to migrate through a hose compared to refrigerants that have been conventionally used. Therefore, a conventional low gas-permeable hose having permeation resistance to a conventional refrigerant gas cannot sufficiently restrain permeation of a $CO_2$ refrigerant.
Since this $CO_2$ refrigerant inherently exhibits lower performance as a cooling medium compared to conventional refrigerants, when a $CO_2$ refrigerant migrates and is lost through the hose, cooling performance of an air conditioner is lowered.

Patent Document 2 as below discloses a refrigerant conveying hose including a barrier layer that is constructed by spirally winding a metal foil strip around a rubber layer to enhance permeation resistance to a refrigerant. However, in the hose including the metal layer at a middle position in a thickness direction of the hose, flexibility of the hose is impaired, and the barrier layer of metal with a different nature is apt to peel off in a long period of time due to deformation of the hose, etc., under repeated actions of internal pressures resulting that permeation resistance of the hose cannot be ensured.

Under the foregoing circumstances, developed is a hose including a gas barrier layer of a resin membrane that is disposed at a middle position in a thickness direction of the hose. The resin membrane, namely the barrier layer is made of polyvinyl alcohol (PVOH, for example, with a saponification degree equal to or higher than 90%) having an excellent permeation resistance (low permeability) to gas. This hose is disclosed in a prior patent application (Japanese Patent Application No. 2006-151305, not published yet).

PVOH has been known in the past as a material that is almost impermeable to various gases such as carbon oxide gas, nitrogen gas and oxygen gas and has excellent gas barrier properties. Based on this technical information, devised is a hose including a resin membrane of PVOH disposed at a middle position in a thickness-direction of the hose, and here the resin membrane of PVOH serves as a gas barrier layer.
And it was confirmed that the hose was provided with an excellent permeation resistance also to a $CO_2$ refrigerant by the resin membrane of PVOH (the barrier layer).
This low gas-permeable hose with the barrier layer of the PVOH resin membrane is very promising as a hose for conveying a $CO_2$ refrigerant that is expected to be practically used in near future.

On the other hand, due to the reason that a $CO_2$ refrigerant exhibits lower performance as a cooling medium compared to conventional refrigerants, in an air conditioner using such $CO_2$ refrigerant, a pressure inside a fluid path for conveying a $CO_2$ refrigerant therethrough, namely an internal pressure of a hose necessarily becomes much higher than in conventional air conditioners.
For example, in a conventional air conditioner, an internal pressure during operation, namely a normal operation pressure is in a range of about 1.511Pa to about 2MPa, while in the air conditioner using a $CO_2$ refrigerant, the normal operation pressure is about 15MPa, nearly ten times as high as that in the conventional air conditioner.

In a hose with a joint fitting for conveying a $CO_2$ refrigerant, a major problem is that a refrigerant leaks out through between the joint fitting and a hose body under the high internal pressure acting on the hose.
The joint fitting is attached to an end portion of the hose body for connection of the hose body and a mating member. The joint fitting has an insert pipe that is inserted in the end portion of the hose body, and a socket fitting that is fitted

on the end portion of the hose body. A sleeve of the socket fitting is swaged in a radially contracting direction while the hose body is inserted in an annular gap defined between the sleeve of the socket fitting and the insert pipe, thereby both of the socket fitting and the insert pipe are connected and fixed to the end portion of the hose body.
In this state, leakage paths or pathways of the refrigerant are apt to be defined along an interface between an outer surface of the insert pipe and an inner surface of the hose body, and further an interface between an inner surface of a radially inwardly directed collar portion of the socket fitting and an outer end surface of the hose body, respectively.
If a $CO_2$ refrigerant migrates and leaks through such leakage pathways outward, a cooling performance or cooling capability of an air conditioner is lowered.
Now, in the hose for conveying a $CO_2$ refrigerant, a significant problem to be solved is to prevent a $CO_2$ refrigerant from migrating and leaking through the pathways defined between the joint fitting and the hose body.
[Patent Document 1] Japanese Patent Number 3107404

[Patent Document 2] JP-A-2003-336774

Under the foregoing circumstances, it is an object of the present invention to provide a hose with a joint fitting for conveying the $CO_2$ refrigerant that is capable of favorably preventing leakage of a $CO_2$ refrigerant through between a joint fitting and a hose body as well as permeation of a $CO_2$ refrigerant through the hose body itself.
According to the present invention, there is provided a novel hose with a joint fitting for conveying a $CO_2$ refrigerant in order to achieve the foregoing object. The hose with the joint fitting for conveying the $CO_2$ refrigerant comprises a hose body and a joint fitting that is attached to an end portion of the hose body. The joint fitting has an insert pipe inserted in the end portion of the hose body, and a socket fitting including a sleeve and a radially inwardly directed collar portion on an axial end of the sleeve. The hose body is relatively inserted in an annular gap defined between the sleeve and the insert pipe. The socket fitting is swaged in a radially contracting direction with the hose body being inserted in the annular gap defined therebetween, thereby is fixed to the hose body together with the insert pipe. The hose body comprises a multilayer structure having a) an innermost layer of a resin layer, for example, made of a polyamide resin, b) a barrier layer with permeation resistance to the refrigerant laminated on an outer side of the innermost layer, c) an inner rubber layer laminated on an outer side of the barrier layer, d) a reinforcing layer laminated on an outer side of the inner rubber layer, and e) an outer rubber layer laminated on an outer side of the reinforcing layer. The barrier layer is, for example, of a resin membrane made of PVOH with a saponification degree equal to or higher than 90%. An axial blocking layer (for example, a blocking layer of cylindrical shape) with permeation resistance to the refrigerant is provided for blocking an axial leakage path of the refrigerant defined in an axial direction of the hose body between an outer surface of the insert pipe and an inner surface of the hose body or along an interface therebetween, and the axial blocking layer extends in the axial direction between the outer surface of the insert pipe and the inner surface of the hose body, or extends in the axial leakage path, along the interface therebetween and in the axial direction. And, a radial blocking layer (for example, a thin-walled or membranous blocking layer of doughnut shape) with permeation resistance to the refrigerant is provided for blocking a radial leakage path of the refrigerant defined in a radial direction of the hose body between an inner surface of the collar portion and an end surface or outer end surface of the hose body that are opposed to each other in the axial direction or along an interface therebetween, and the radial blocking layer is continued to or substantially continued to the axial blocking layer and extends in the radial direction between the inner surface of the collar portion and the end surface of the hose body or extends in the radial leakage path, along the interface therebetween and in the radial direction. For example, the radial blocking layer may be continued to the axial blocking layer by pressing an radially inner end portion or inner peripheral end portion of the radial blocking layer against an outer peripheral surface of a longitudinally or axially outer end portion of the axial blocking layer. The axial blocking layer may be an axial blocking membrane.
According to one aspect of the present invention, the radial blocking layer extends entirely over the end surface of the hose body including end surfaces of the inner rubber layer and the outer rubber layer.
The axial blocking layer may be formed so as to extend in the axial direction between the outer surface of the insert pipe and the inner surface of the hose body while being coated on the outer surface of the insert pipe and pressed against the inner surface of the hose body. And, the radial blocking layer may be formed so as to extend in the radial direction between the inner surface of the collar portion and the end surface of the hose body while being coated on the end surface of the hose body and pressed against the inner surface of the collar portion. Here, the radial blocking layer is preferably coated entirely over the end surface of the hose body. That is, the radial blocking layer is formed and coated over an entire circumference and an entire width (the width in a radial direction of the hose body) of the end surface of the hose body.
As stated above, in a hose with a joint fitting for conveying a $CO_2$ refrigerant according to the present invention, a hose body has a multilayer structure having an innermost layer of a resin layer, a barrier layer with permeation resistance

to the refrigerant on an outer side of the innermost layer, for example, of a resin membrane of PVOH with a saponification degree equal to or higher than 90%, an inner rubber layer on an outer side of the barrier layer, a reinforcing layer on an outer side of the inner rubber layer, and an outer rubber layer on an outer side of the reinforcing layer. And, an axial blocking layer with permeation resistance to the refrigerant is provided so as to extend in an axial direction of the hose body between an outer surface of an insert pipe and an inner surface of the hose body for blocking an axial leakage path of the refrigerant defined in the axial direction between the outer surface of the insert pipe and the inner surface of the hose body. And, a radial blocking layer with permeation resistance to the refrigerant is also provided so as to extend in a radial direction of the hose body between an inner surface of a collar portion and an end surface or outer end surface of the hose body and so as to be substantially continued to the axial blocking layer for blocking a radial leakage path of the refrigerant defined in the radial direction of the hose body between the inner surface of the collar portion and the end surface of the hose body.

According to the present invention, it can be well prevented by the axial blocking layer with permeation resistance to the refrigerant that the $CO_2$ refrigerant flowing in the hose migrates and leaks along between the outer surface of the insert pipe and the inner surface of the hose body or along the interface therebetween toward an extremity of the hose body.

And, just in case that the $CO_2$ refrigerant migrates and leaks in the axial direction of the hose body and along the interface therebetween toward the extremity of the hose body or the hose, the radial blocking layer with permeation resistance to the refrigerant is provided on an extremity side of the hose body, more particularly, so as to extend along between the inner surface of the collar portion and the end surface of the hose body and so as to be substantially continued to the axial blocking layer. Therefore, it can be well prevented by the radial blocking layer that the $CO_2$ refrigerant further migrates and leaks through between the inner surface of the collar portion and the end surface of the hose body outwardly.

In the hose with the joint fitting, there are two possible routes for leakage of the $CO_2$ refrigerant that has migrated in the axial direction between the outer surface of the insert pipe and the inner surface of the hose body. In the first route, the $CO_2$ refrigerant migrates through between the inner surface of the collar portion and the outer end surface of the hose body, then leaks outward through between a radially inner surface of the sleeve af the socket fitting and an outer surface of the hose body. On the other hand, in the second route, the $CO_2$ refrigerant permeates from outside the barrier layer of hose body directly through the hose body (not through the aforementioned route) and leaks outward. However, in the present invention, it can be effectively prevented that the $CO_2$ refrigerant leaks outward through both routes.

Preferably, the axial blocking layer is coated on the outer surface of the insert pipe and pressed against the inner surface of the hose body. Thereby a sufficient seal can be easily ensured between the insert pipe and the hose body, even when the insert pipe is made of metal and the hose body includes an innermost layer made of resin. And, preferably, the radial blocking layer is coated on the end surface of the hose body and is pressed against the inner surface of the collar potion. This may simplify formation of the radial blocking layer. And, when the radial blocking layer is coated entirely over the end surface of the hose body, permeation of the refrigerant through the end surface of the hose body can be effectively prevented. The radial blocking layer may be formed by tightly sandwiching a layer member separate from the collar portion and the hose body (not fixed or adhered to the collar portion and the hose body) by the inner surface of the collar portion and the end surface of the hose body. In this manner, the radial blocking layer may be formed more easily. Here, it is also effective to press the layer member entirely against the end surface of the hose body.

According to the present invention, the resin innermost layer is preferably made of a polyamide resin. Thereby a refrigerant-permcation resistance can be further enhanced entirely through the hose.

Now, the preferred embodiments of the present invention will be described in detail with reference to the drawings.

## BRIEF DESCRIPTION OF THE DRAWINGS

Fig. 1 is a vertical sectional view of a relevant part of a hose with a joint fitting according to the present invention.

Fig. 2 is a cross sectional view of the hose with the joint fitting of Fig. 1.

Fig. 3 is a view of a relevant part of another hose with a joint fitting of the present invention.

## DETAILED DESCRIPTIONS OF THE PREFERRED EMBODIMENTS

In Fig. 1, reference numeral 10 indicates a hose with a joint fitting (hereinafter just referred to as a hose) for conveying a carbon dioxide refrigerant ($CO_2$ refrigerant). The hose 10 has a hose body 12 and the joint fitting 14 that is

attached on or to an axial end portion of the hose body 12.
The joint fitting 14 comprises a metal insert pipe 16 that is inserted in an interior of the hose body 12, and a socket fitting 18 that is fitted on the axial end portion of the hose body 12.
And, the socket fitting 18 has a cylindrical sleeve 20, and a radially inwardly directed collar portion 22 of an annular shape on an axial end of the sleeve 20.

The joint fitting 14 is attached to the end portion of the hose body 12 in a following manner.
The end portion of the hose body 12 is relatively inserted in an annular gap 24 defined between the sleeve 20 of the socket fitting 18 and the inert pipe 16, and the socket fitting 18, in this state, is swaged at swaged points $P_1$, $P_2$, $P_3$ and $P_4$ of the socket fitting 18 (in Fig. 1) in a radially contracting direction, and the joint fitting 14 is connected and fixed to the hose body 12 with the end portion of the hose body 12 being compressively sandwiched between the insert pipe 16 and the sleeve 20 in a radial direction of the hose body 12.

By swaging the collar portion 22 of the socket fitting 18 at the swaged point $P_1$, a radially inner end portion or inner peripheral end portion of the collar portion 22 engages in an engaging groove 26 in an outer peripheral surface of the insert pipe 16 while being plastically deformed, and thereby the socket fitting 18 and the insert pipe 16 are fixed to each other in locked and unitary relation. Meantime, the swaging at the swaged point $P_1$ may be conducted prior to the relative insertion of the end portion of the hose body 12 in the annular gap 24.
The swaged point $P_1$ in Fig. 1 is called a locking swage portion. By swaging the socket fitting 18 at the locking swage portion, the radially inner end portion of the collar portion 22 is force-fitted in the engaging groove 26 while being plastically deformed, whereby the socket fitting 18 and the insert pipe 16 are fixed to each other, and at the same time, an air-tight seal is formed between the radially inner end portion of the collar portion 22 and the insert pipe 16.

As shown in Figs. 1 and 2, the hose body 12 comprises a multilayer structure including an innermost layer 28 of a resin layer, a barrier layer 30 of a resin membrane made of polyvinyl alcohol on an outer side of the innermost layer 28, an inner rubber layer 32 on an outer side of the barrier layer 30, a first reinforcing layer 34 and a second reinforcing layer 38 on an outer side of the inner rubber layer 32, and an outer rubber layer 40 that defines an outermost layer.
Here, a middle rubber layer 36 is interposed between the first reinforcing layer 34 and the second reinforcing layer 38.

For the innermost layer 28, various resin materials may be used. Here, the innermost layer 28 is preferably formed from a polyamide resin.
For example, the polyamide resin may be polyamide 6 (PA6), polyamide 66 (PA66), polyamide 99 (PA99), polyamide 610 (PA610), polyamide 612 (PA612), polyamide 11 (PA11), polyamide 912 (PA912), polyamide 12 (PA12), copolymer of PA6 and PA66 (PA6/66), copolymer of PA6 and PA12 (PA6/12), or the like. Such polyamide resin may be used alone, or as a blend by combining two or more of these polyamide resins.
In particular, PA6 is suitable since PA 6 is excellent in adhesiveness of layers and permeation resistance (low-permeability) to a refrigerant.

Or, an alloy of PA or PA6 and modified polyolefin or maleic anhydride modified polyolefin is also suitable due to its low flexural modulus, excellent flexibility and excellent heat resistance. Specifically, suitable is Zytel ST series such as Zytel ST801, Zytel ST811, or Zytel ST811HS (all are trade names of products manufactured by DuPont).
The innermost layer 28 may have a wall-thickness in a range of 0.02mm to 2.0mm.

The barrier layer 30 is the resin membrane of PVOH as stated above. Here, it is necessary to use PVOH having a saponification degree of 90% or higher.
PVOH is industrially prepared by saponifying (hydrolyzing) polyvinyl acetate. The saponification degree is determined by a value m and a value n in the following chemical formula (Chemical Formula 1).
Specifically, the saponification degree (%) is calculated from the value m and the value n in the following formula (Mathematical Formula 1).
This saponification degree indicates a degree of hydrolysis. A fully hydrolyzed product or material has a saponification degree of 100%.

Chemical Formula 1

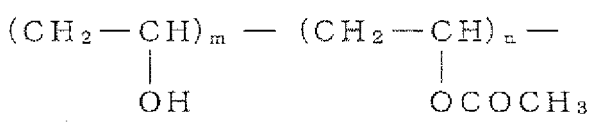

Mathematical Formula 1

$$\text{Saponification degree} : [m / (m + n)] \times 100$$

A product (polymer) with a high saponification degree has an increased hydroxyl group content, and accordingly has an enhanced gas permeation resistance.
In the present embodiment, for the resin membrane of the barrier layer 30, PVOH with a saponification degree of 90% or higher should be used.
When PVOH with saponifrication degree lower than 90% is used, the barrier layer 30 cannot be provided with permeation resistance (low permeability) to $CO_2$ refrigerant at a desired level.
The barrier layer 30 has a wall-thickness in a range of 5μm to 100μm.
When the wall-thickness of the barrier layer 30 is smaller than 5μm, the barrier layer 30 is insufficient in permeation resistance to $CO_2$ refrigerant and a pinhole is apt to be created in the barrier layer 30. On the contrary, when the wall-thickness of the barrier layer 30 is greater than 100μm, the resin membrane of the barrier layer 30 is too hard, and thereby the barrier layer 30 adversely affects flexibility of the hose, and there is a fear that a breakage (a crack) is caused in the barrier layer 30.
Meantime, since it is usually difficult to adhere the barrier layer 30 of a PVOH resin membrane directly to the innermost layer 28, an adhesive layer is disposed or formed between the innermost layer 28 and the barrier layer 30 to adhere the innermost layer 28 and the barrier layer 30 by the adhesive layer.
In this case, for example, an adhesive of the adhesive layer may be of a gum type, a urethane type, a polyester type, an isocyanate type, an epoxy (resin) type, or the like- Each of the above types of adhesives may be used alone or as a blend by combining two or more of the above types of adhesives. However, the adhesive of the gum type is particularly suitable since it provides excellent adhesion properties between the innermost layer 28 and the barrier layer 30.
On the other hand, for the inner rubber layer 32 and the outer rubber layer 40, for example, a rubber material such as butyl rubber (IIR), halogenated butyl rubber (halogenated IIR) like chlorobutyl rubber (Cl-IIR) and bromobutyl rubber (Br-IIR), etc., acrylonitrile-butadiene-rubber (NBR), chloroplene rubber (CR), ethylene-propylene-diene-rubber (EPDM), ethylene-propylene rubber (EPM), fluoro rubber (FKM), epichlorohydrin-rubber (ECO), acrylic rubber, silicon rubber, chlorinated polyethylene (CPE) rubber, or urethane rubber may be preferably used. In particular, for the inner rubber layer 32, IIR and halogenated IIR are most suitable since IIR and halogenated IIR are excellent in resistance to an external water. And, for the outer rubber layer 40, EPDM is particularly suitable in view of resistance to climate conditions.
Here, each of the rubber materials is usually used by suitably blending with a filler such as carbon black, a vulcanizing agent or various other compounding agents.
Meantime, the inner rubber layer 32 preferably has a wall-thickness in a range of 0.5mm to 5.0mm, and the outer rubber layer 40 preferably has a wall-thickness in a range of 0.5mm to 2.0mm.
For the first reinforcing layer 34 and the second reinforcing layer 38 stated above, for example, a reinforcing filament member such as polyethylene terephthalate (PET), polyethylene naphthalate (PEN), aramid, polyamide, vinylon, rayon, or a metal wire may be used. These filament members are spirally wound, braided or knitted to form the first reinforcing layer 34 and the second reinforcing layer 38.
For the middle rubber layer 36 between the first reinforcing layer 34 and the second reinforcing layer 38, the same material as stated above for the inner rubber layer 32 and the outer rubber layer 40 may be used.
The middle rubber layer 36 preferably has a wall-thickness in a range of 0.1mm to 0.5mm.
The hose 10 of the present embodiment is produced, for example, as follows.
First, the innermost layer 28 of a resin layer is formed by extrusion, and the adhesive layer is formed on an outer surface of the innermost layer 28, for example, by coating or the like.
A coating fluid is prepared by dissolving PVOH powder in a warm water or a hot water, and the coating fluid is applied on an outer surface of the innermost layer 28 (specifically, an outer surface of the adhesive layer), for example, by dipping the innermost layer 28 in the coating fluid (soaking the innermost layer 28 in the coating fluid). Then, water of a solvent medium in the coating fluid is evaporated and removed by means of drying process, thereby a resin membrane of PVOH is formed on the outer surface of the innermost layer 28 with the adhesive layer interposed therebetween.
However, instead of dipping stated above, other means such as spraying, roll-coating, or brush-coating may be applied for formation of the resin membrane of PVOH.
A thickness of the resin membrane of PVOH obtained in this single coating cycle is about 10μm.
In order to further increase the thickness of the resin membrane, this coating cycle is repeated or concentration of PVOH water solution or PVOH coating fluid is increased.

After the barrier layer 30 of the PVOH resin membrane is laminated on the outer surface of the innermost layer 28 as stated above, in the common procedure, the inner rubber layer 32 is laminated on an outer surface of the barrier layer 30, the first reinforcing layer 34 is braided over the inner rubber layer 32, the middle rubber layer 36 is extruded over the first reinforcing layer 34, the second reinforcing layer 38 is braided over the middle rubber layer 36, and finally, the outer rubber layer 40 is extruded over the second reinforcing layer 38, thereby an elongate extruded body or elongate body is obtained. Then, the elongate extruded body is vulcanized, cut into predetermined lengths, and the hose body 12 as shown in Fig. 1 is obtained.
Meanwhile, an inner diameter of the hose body 12 is about 5mm to 40mm.
Following is a specific example of structure of each layer of the hose body 12.

Inner most layer 28

Material: PA6
Wall-thickness: 0.15mm

Barrier layer 3 0 :

Material: PVOH resin with a saponification degree of 99%
Wall-thickness: 10μm

Inner rubber layer 32

Material: Br-IIR
Wall-thickness: 1.6mm

First reinforcing layer 34

Material and construction: Aramid yarns, braided
Braid angle: 51°

Middle rubber layer 36

Material: EPDM
Wall-thickness: 0.3mm

Second reinforcing layer 38

Material and construction: Aramid yam, braided
Braid angle: 57°

Outer rubber layer 40

Material: EPDM
Wall-thickness: 1.0mm

As shown in Fig, 1, in this embodiment, an axial blocking layer 42 with refrigerant-permeation resistance is provided for blocking an axial leakage path of $CO_2$ refrigerant that is defined along an axial interface between an outer surface of the insert pipe 16 and an inner surface of the hose body 12 in the axial interface therebetween. The axial blocking layer 42 has a cylindrical shape that extends axially along the axial interface between the outer surface of the insert pipe 16 and the inner surface of the hose body 12.
This axial blocking layer 42 is provided so as to extend through an entire length of a portion of the insert pipe 16 that is inserted in the hose body 12, specifically, an entire length from an extremity of an inserting end of the insert pipe 16 to an axial position corresponding to an inner surface of the collar portion 22 of the socket fitting 18 and closely contact with an outer surface of the insert pipe 16 and an inner surface of the hose body 12 along the axial interface between the outer surface of the insert pipe 16 and the inner surface of the hose body 12.
In this embodiment, a radial blocking layer 44 with refrigerant-permeation resistance is also provided for blocking a leakage path of the refrigerant that is defined along an interface between an inner surface of the collar portion 22 of the socket fitting 18 and an end surface or outer end surface of the hose body 12 in the radial interface therebetween.

The radial blocking layer 44 is provided so as to extend entirely over the inner surface of the collar portion 22 corresponding to an entire end surface of the hose body 12 and closely contact with the end surface of the hose body 12 and the inner surface of the collar portion 22.

A radially inner end of the radial blocking layer 44 is continuous to (for example, closely contacts with, is adhered to, or is united with) the axial blocking layer 42 along an entire inner circumference of the radial blocking layer 44, and a radially outer end of the radial blocking layer 44 closely contacts with an inner surface of the sleeve 20 of the socket fitting 18 along an entire outer circumference of the radial blocking layer 44.

In this embodiment, for the axial blocking layer 42, a material such as polyacrylic acid, polymethacrylic acid, chlorosulfonated polyethylene rubber (CSM), fluoro rubber (FKM), or PVOH.may be used.

The axial blocking layer 42 may have a wall-thickness in a range of 1 μm to 9μm.

The axial blocking layer 42, for example, may be produced as follows. The engaging groove 26 of the insert pipe 16 is masked by a cap and the insert pipe 16 with the engaging groove 26 masked is dipped in a coating fluid for the axial blocking layer 42 up to a predetermined height or length. Then, the insert pipe 16 is taken out of the coating fluid, hanged and dried in air, subject to a necessary heat treatment, and the cap is removed, thereby the axial blocking layer 42 is coated on the insert pipe 16 in a form of an axial blocking membrane. The axial blocking layer 42 is, for example, adhered to the outer surface of the insert pipe 16.

On the other hand, for the radial blocking layer 44, a material such as a resin membrane of PVOH, chlorosulfonated polyethylene rubber (CSM) of high refrigerant-permeation resistance, fluoro type rubber material such as FKM, polyacrylic acid, or polymethacrylic acid may be used.

The radial blocking layer 44 may have a wall-thickness of 1μm to 9μm. The radial blocking layer 44, for example, may be produced as follows. An aperture in the outer end surface of the hose body 12 (an aperture defining inner circumference of the hose body 12) is closed by a cap, the outer end surface of the hose body 12 with the aperture being closed is dipped in a coating fluid for the radial blocking layer 44, the hose body 12 is taken out of the coating fluid and hanged to be dried in air. Now, the radial blocking layer 44 is formed and coated on the end surface of the hose body 12 in a form of a radial blocking membrane. Then, the hose body 12 with the cap removed, specifically the end portion of the hose body 12 is relatively inserted in the annular gap 24 in the joint fitting 14, the socket fitting 18 of the joint fitting 14 is swaged onto the hose body 12, and is subject to a necessary heat treatment. Here, the radial blocking layer 44 is pressed against the inner surface of the collar portion 22, and, for example, is adhered to the end surface of the hose body 12.

Or, the above rubber material may be applied in a form of a gum adhesive for formation of the radial blocking layer 44. The rubber material is dissolved in a proper solvent such as toluene to prepare the gum adhesion, and the gum adhesion prepared is coated on the outer end surface of the hose body 12, or according to the circumstances, the gum adhesive is coated on the axially inner surface of the collar portion 22 to form the radial blocking layer 44.

According to the embodiment as stated above, it is well prevented by the axial blocking layer 42 that $CO_2$ refrigerant flowing in the hose 10 migrates and leaks along the axial interface between the outer surface of the insert pipe 16 and the inner surface of the hose body 12 toward an extremity of the hose body 12.

And, just in case that the $CO_2$ refrigerant migrates and leaks axially (along the axial interface therebetween) toward the extremity of the hose body 12 or the hose 10, the radial blocking layer 44 with refrigerant-permeation resistance is provided on an extremity side of the hose body 12. Therefore, it can be well prevented by the radial blocking layer 44 that the $CO_2$ refrigerant further migrates and leaks outwardly.

There may be a fear that the $CO_2$ refrigerant migrates axially between the outer surface of the insert pipe 16 and the inner surface of the hose body 12, Such a $CO_2$ refrigerant that has migrated axially, then may migrate through between the inner surface of the collar portion 22 and the outer end surface of the hose body 12, and may leak outward through an interface between an inner surface of the sleeve 20 of the socket fitting 18 and an outer surface of the hose body 12. On the other hand, the $CO_2$ refrigerant that has migrated axially therebetween, then may permeate from outside the barrier layer 30 of the resin membrane of PVOH directly through the hose body 12 (not through the aforementioned route) and leak outward. However, in this embodiment, the refrigerant-permeation resistant blocking layer 44 is provided or adhered on the outer end surface of the hose body 12, and thereby it can be effectively prevented that the $CO_2$ refrigerant leaks outward through either route.

In particular, in this embodiment, since the radial blocking layer 44 is formed entirely over the axially outer end surface of the hose body 12 including outer end surfaces of the inner rubber layer 32 and the outer rubber layer 40, the radial blocking layer 44 can more effectively prevent leakage of the $CO_2$ refrigerant.

Meanwhile, the radial blocking layer 44 may be provided also in the following manner. The refrigerant-permeation resistant radial blocking layer (a layer member) 44 is initially formed separately from the hose body 12 and the socket fitting 18 as shown in Fig. 3. Then, the radial blocking layer (a layer member) 44 formed separately is inserted or disposed, together with the hose body 12, in the annular gap 24 defined between the socket fitting 18 and the insert pipe 16 (so as to contact the radial blocking layer 44 closely with the inner surface of the collar portion 22 and the outer end surface of the hose body 12), in this state, the socket fitting 18 is swaged to fix the joint fitting 14 to the hose body 12, and the

radial blocking layer 44 is formed between the outer end surface of the hose body 12 and the inner surface of the collar portion 22 or radial interface therebetween. Here, a radially inner end of the radial blocking layer 44 is continued to or closely contacts with the axial blocking layer 42 throughout an entire circumference of the axial blocking layer 42.

Although the preferred embodiment has been described above, this is only one of embodiments of the present invention. The present invention may be embodied by variety of modifications without departing from the scope of the invention.

## Claims

1. A hose with a joint fitting for conveying a carbon dioxide refrigerant, comprising:

    a hose body (12) having a) an innermost layer (28) of a resin layer, b) a barrier layer (30) with permeation resistance to the refrigerant laminated on an outer side of the innermost layer (28), c) an inner rubber layer (32) laminated on an outer side of the barrier layer (30), d) a reinforcing layer (34, 38) laminated on an outer side of the inner rubber layer (32), and e) an outer rubber layer (40) laminated on an outer side of the reinforcing layer (34, 38);
    a joint fitting (14) attached to an end portion of the hose body (12), the joint fitting (14) having an insert pipe (16) inserted in the end portion of the hose body (12), and a socket fitting (18) including a sleeve (20) and a radially inwardly directed collar portion (22) on an axial end of the sleeve (20), the socket fitting (18) being swaged in a radially contracting direction with the hose body (12) being inserted in an annular gap defined between the sleeve (20) and the insert pipe (16), thereby being fixed to the hose body (12) together with the insert pipe (16);
    an axial blocking layer (42) with permeation resistance to the refrigerant for blocking an axial leakage path of the refrigerant defined in an axial direction of the hose body (12) between an outer surface of the insert pipe (16) and an inner surface of the hose body (12), the axial blocking layer (42) extending in the axial direction between the outer surface of the insert pipe (16) and the inner surface of the hose body (12).
    a radial blocking layer (44) with permeation resistance to the refrigerant for blocking a radial leakage path of the refrigerant defined in a radial direction of the hose body (12) between an inner surface of the collar portion (22) and an end surface of the hose body (12) that are opposed to each other in the axial direction, the radial blocking layer (44) extending in the radial direction between the inner surface of the collar portion (22) and the end surface of the hose body (12) and being continued to or substantially continued to the axial blocking layer (42).

2. The hose with the joint fitting for conveying the carbon dioxide refrigerant as set forth in claim 1, wherein the radial blocking layer (44) extends entirely over the end surface of the hose body (12) including end surfaces of the inner rubber layer (32) and the outer rubber layer (40).

3. The hose with the joint fitting for conveying the carbon dioxide refrigerant as set forth in claim 1, wherein the radial blocking layer (44) extends in the radial direction between the inner surface of the collar portion (22) and the end surface of the hose body (12) while being coated on the end surface of the hose body (12) and pressed against the inner surface of the collar portion (22).

4. The hose with the joint fitting for conveying the carbon dioxide refrigerant as set forth in claim 3, wherein the radial blocking layer (44) is coated entirely over the end surface of the hose body (12).

5. The hose with the joint fitting for conveying the carbon dioxide refrigerant as set forth in claim 1, wherein the radial blocking layer (44) is a layer member separate from the collar portion (22) and the hose body (12), and the radial blocking layer (44) is tightly sandwiched by the inner surface of the collar portion (22) and the end surface of the hose body (12).

6. The hose with the joint fitting for conveying the carbon dioxide refrigerant as set forth in any one of claims 1 to 5, wherein the axial blocking layer (42) extends in the axial direction between the outer surface of the insert pipe (16) and the inner surface of the hose body (12) while being coated on the outer surface of the insert pipe (16) and pressed against the inner surface of the hose body (12).

7. The hose with the joint fitting for conveying the carbon dioxide refrigerant as set forth in any one of claims 1 to 6, wherein the barrier layer (30) is a resin membrane made of polyvinyl alcohol.

**8.** The hose with the joint fitting for conveying the carbon dioxide refrigerant as set forth in claim 7, wherein the polyvinyl alcohol has a saponification degree equal to or higher than 90%.

**9.** The hose with the joint fitting for conveying the carbon dioxide refrigerant as set forth in any one of claims 1 to 8, wherein the innermost layer (28) is made of polyamide resin.

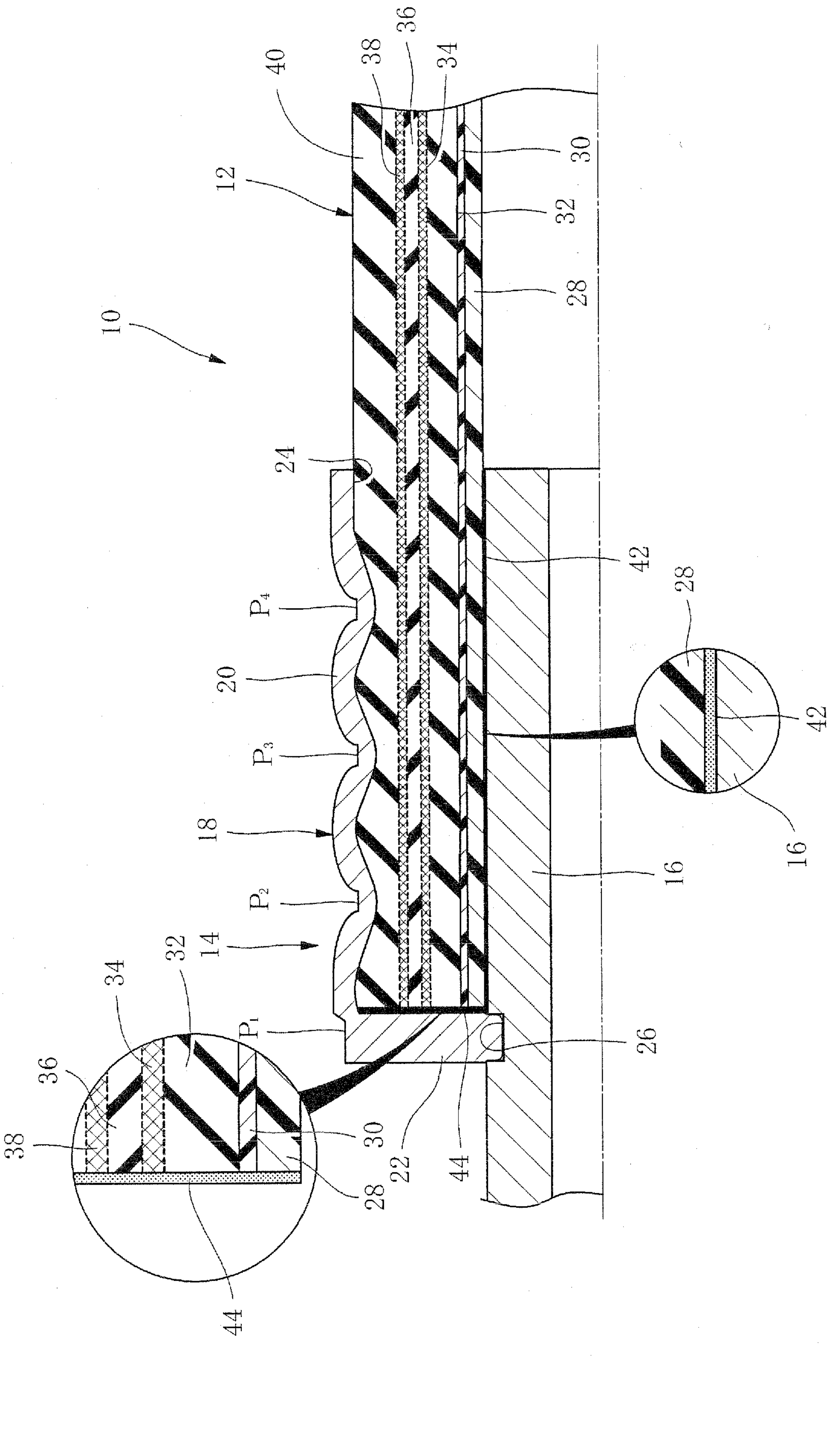


FIG. 1

FIG.2

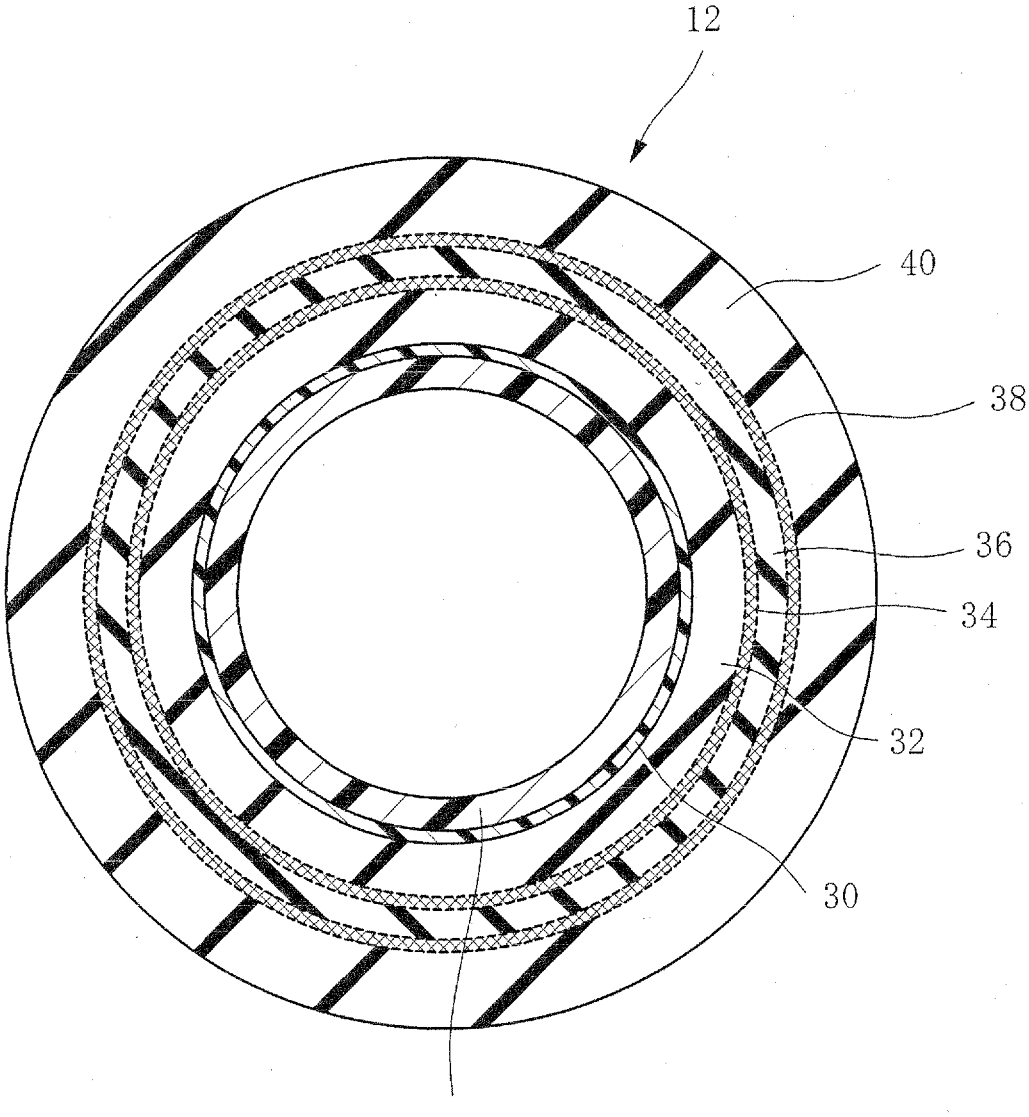

FIG. 3

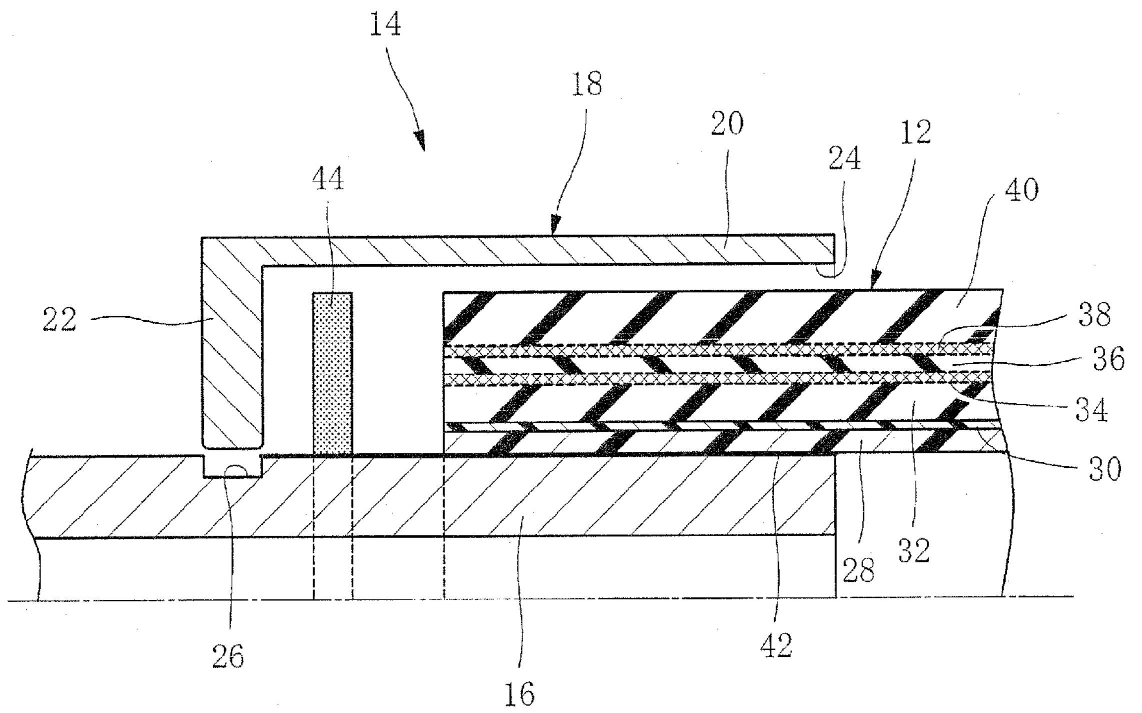

European Patent Office

# EUROPEAN SEARCH REPORT

Application Number
EP 08 15 3400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 184 116 A (PETER EASTMAN JOSEPH) 19 December 1939 (1939-12-19) * page 1, line 1 - page 4, line 32; figures 1,2,5 * | 1-6 | INV. F16L33/207 F16L11/08 |
| Y | * page 1, line 1 - page 4, line 32; figures 1,2,5 * | 7-9 | |
| Y | US 2007/048475 A1 (HAINES BRADLEY J [US]) 1 March 2007 (2007-03-01) * page 1, paragraph 4 - page 3, paragraph 26; figures 1,2 * | 7-9 | |
| A | US 4 660 867 A (KEMPER DENNIS C [US] ET AL) 28 April 1987 (1987-04-28) * column 1, line 6 - column 4, line 33; figures 1,2 * | 1-6 | |
| D,A | JP 2003 336774 A (NICHIRIN CO LTD) 28 November 2003 (2003-11-28) * abstract; figure 1 * | 1,7-9 | |
| | | | TECHNICAL FIELDS SEARCHED (IPC) |
| | | | F16L |

The present search report has been drawn up for all claims

3

| Place of search | Date of completion of the search | Examiner |
|---|---|---|
| The Hague | 31 July 2008 | Hutter, Manfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 08 15 3400

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2008

| Patent document cited in search report | Publication date | Patent family member(s) | Publication date |
|---|---|---|---|
| US 2184116 A | 19-12-1939 | NONE | |
| US 2007048475 A1 | 01-03-2007 | NONE | |
| US 4660867 A | 28-04-1987 | CA 1290362 C | 08-10-1991 |
| | | DE 3713172 A1 | 29-10-1987 |
| | | FR 2598483 A1 | 13-11-1987 |
| | | GB 2189561 A | 28-10-1987 |
| | | JP 62288791 A | 15-12-1987 |
| | | MX 164349 B | 05-08-1992 |
| | | SE 8701635 A | 23-10-1987 |
| JP 2003336774 A | 28-11-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006151305 A
- JP 3107404 B
- JP 2003336774 A